# EUROPEAN PATENT SPECIFICATION

(11) **EP 2 286 121 B1**
(45) Date of publication and mention of the grant of the patent: **15.02.2017**
(21) Application number: 09745485.4
(22) Date of filing: 16.03.2009
(51) Int. Cl.: F16K 31/06, A47J 31/46

(54) **DEVICE FOR DELIVERING BEVERAGES**
VORRICHTUNG ZUR ABGABE VON GETRÄNKEN
DISPOSITIF POUR DISTRIBUER DES BOISSONS

(30) Priority: 16.05.2008 IT MI20080891
(43) Date of publication of application: 23.02.2011
(73) Proprietor: O.D.L. S.r.l., 23827 Lierna (LC) (IT)
(72) Inventor: PENSA, Carlo, Maria, I-22050 Esino Lario (IT)
(74) Representative: Riccardi, Sergio
(86) International application number: PCT/EP2009/002057
(87) International publication number: WO 2009/138151

(56) References cited:
- EP-A- 0 243 677
- DE-A1- 3 111 716
- DE-A1- 4 328 043
- DE-A1-102006 003 543
- DE-U- 1 705 867
- GB-A- 2 130 343

## Description

The present invention relates to a device adapted to a measured delivering of beverages, and in particular wine, provided with a system for eliminating leftover volumes of beverage inside said device.

Automatic or manual apparatuses for delivering beverages are spreading more and more.

Particularly the usage of apparatuses for delivering wine by drawing it directly from the bottle so as to be able to offer a product of high quality.

Usually the wine is pushed out of the bottle by use of inert gas, nitrogen mostly, at low pressure and the delivery is carried out by opening and closing a cut-off element.
With such system it is possible to maintain an high quality of the wine for a long time and therefore to sell all the bottle glass by glass without having taste changes.

The use of manual faucets has been overcome due to the need of measuring exactly the delivered volume: it is therefore intended to use a faucet with an electric opening device actuated by an electronic control system connected to a flow or time meter. The deliver is therefore easily programmable.

During delivery, particularly in case of quality wine, is much important that the outlet conduit downstream in respect of the valve, exposed to the air during no delivery periods, is fully emptied in order to not permit the product acidification, with consequential impossibility of selling more glasses of the same bottle.

In order to obtain this result different systems are adopted, particularly the use of a solenoid valve for the delivery and a second solenoid valve for airing the outlet conduit.

It involves high costs but also the impossibility of fully empting the conduit due to the complexity at the crossing of the seats of the solenoid valves.

Document EP-A-243 677, which represents the closest prior art, discloses a beverage delivering device according to the features set out in the preamble of claim 1.

With reference to the prior art, EP 0243677A2 describes a valve, operating in the field of delivering beverages, which comprises a conduit and air channel system that is similar to the one described by the present invention, but the problem solved from the present invention, and thus the application of the beverage delivery system described by the present invention, differs from the one described in EP as this valve is not suitable for working by gravity pressure, but not under imposed pressure. Here when the movable nucleus is activated, the outlet channel of the valve is not closed, consequently, the valve is adapted to work when the level of the outlet channel is above the position of the level of the water in the tank. This is the only way this valve is subjected to pressure, and its operation is almost by gravity. Therefore the structure of this valve seems similar to the one of the present invention but does not solve the same technical problem, that is, providing a low cost system adapted to fully empty the outlet conduit of a delivering beverage system adapted for beverages to be delivered by exerting a determinate pressure.

The present invention solves the problem of fully emptying the conduit for delivering beverages, thus avoiding the acidification of the beverage, with a cheap and effective solution, which did not exist in the prior art.

A similar valve is described in DE U1708672, which describes an electromagnetic valve which is adapted for pneumatic or hydraulics devices, but this is not the particular field of delivering beverages, and furthermore, this document is not adapted to manage the pressure when the valve is closed, therefore this valve does not address the same problem solved by the present invention.

The present invention is defined in independent claim 1. Preferred embodiments of the invention are defined in the dependent claims.

A detailed description of some preferred embodiments according to the present invention will now be provided, with reference to the annexed drawings wherein:
fig. 1 shows a first embodiment of the present invention having a solenoid valve operating with alternate current,
fig. 2 shows a second embodiment of the present invention having a solenoid valve operating with direct current,
fig. 3 shows a third embodiment of the present invention,
fig. 4 shows a fourth embodiment of the present invention,
fig. 5 shows a prior art device in the no delivering beverage status, and
fig. 6 shows the prior art device in fig. 5, in the delivering beverage status.

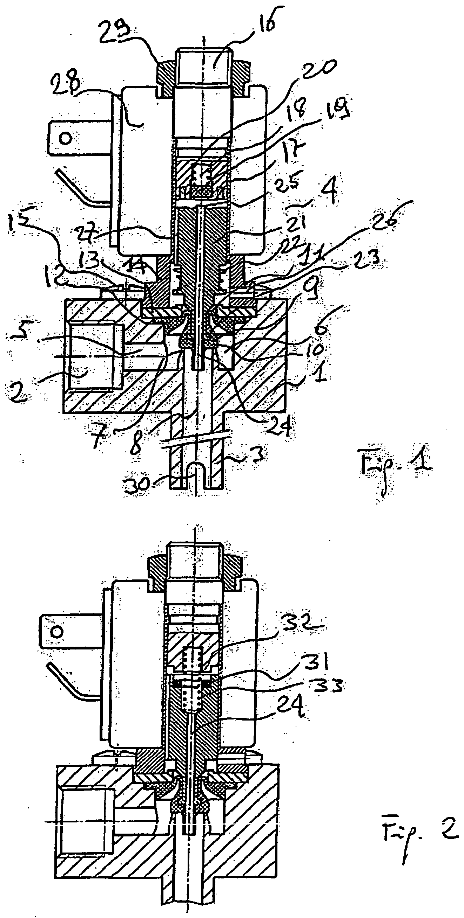

With reference to fig. 1, in a faucet body 1 a product inlet conduit 2 and an outlet conduit 3 are formed. A seat for a solenoid valve 4 is also therein formed.

The product from the inlet conduit 2 through a conduit 5 reaches a chamber 6 where an orifice 7 is placed through which an outlet conduit 8 is gained and on which an elastic gasket 9 acts as seal. Said gasket 9 comprises a shutter 10, a volute 11 and a gasket body 12 which is held in seat by a ring 13 in turn blocked by the solenoid valve sleeve 14 by screws 15.

Said sleeve 14 is integral with the fixed nucleus 16 which has on the inner surface facing the movable nucleus the short circuit ring 17 and a chamber 18 wherein a rubber piece 19 pushed by a spring 20 is housed.

The movable nucleus 21 is pushed down by a conical spring 22 for closing the orifice 7 and comprises an element 23 for hooking and sealing the elastic gasket besides a conduit 24 passing through the whole nucleus and connecting the outlet conduit 8 with the interior of the solenoid valve sleeve. On the top of the movable nucleus, at the exit of the conduit 24, an orifice 25 is formed; the sleeve chamber is connected with the atmosphere by the hole 26. Into the movable nucleus 21 is then illustrated a milling which allows the air for freely circulating in the whole internal sleeve chamber.

Onto the sleeve 28 there is placed a coil held in position by a nut 29.

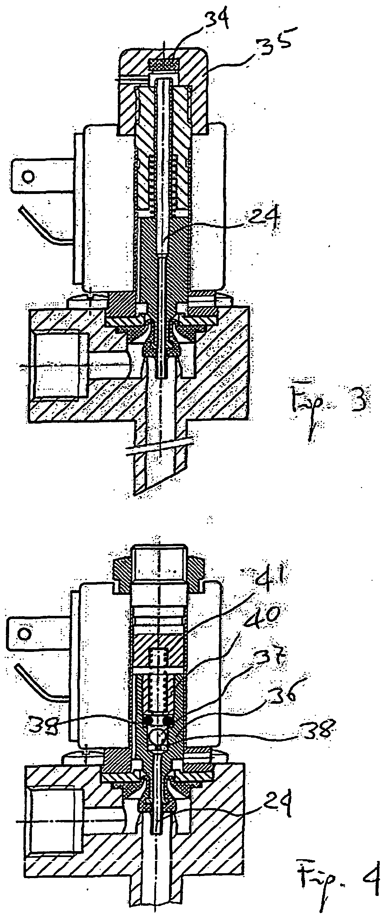

Into the outlet conduit is illustrated a milling 30 often used for eliminating drops, in other cases an oblique conduit cut, as shown in fig. 3, achieving analogous results.

The solenoid valve, as described, is in rest position, closes the passage between the product entry and the outlet conduit and keeps the same outlet conduit contacting the atmosphere by the hole 26, the inner chamber of the sleeve and the conduit 24 of the movable nucleus.

By actuating the solenoid valve, that is by supplying current to the coil 28, the movable nucleus rises till it contacts the fixed nucleus, the orifice 25 is closed by the rubber piece 19 pushed by the spring 18 towards a balance position whilst the outlet conduit is opened and the wine or beverage flow occurs regularly. By deactivating the solenoid valve, with the orifice closing the initial condition is restored and the outlet conduit will be optimally emptied. The conduit length will be gauged such that the weight of the column of liquid could contrast the surface tension occurring due to the narrow size of the same conduit and therefore facilitate the emptying.

The length of the protruding portion of the conduit 24 beyond the gasket determinates improvements for the beverage flow and the emptying of the outlet conduit, but it does not limit the uniqueness of the present patent application.

In fig. 2 a second embodiment according to the present invention is shown, particularly for direct current apparatuses wherein the shape of the fixed nucleus and movable nucleus is much important for the solenoid valve efficiency. The closing element of the aeration conduit 24 is formed by a gasket 31, placed onto the movable nucleus, which contrasts the surface 32 of the fixed nucleus; in this case the pushing spring 33 of the solenoid valve movable nucleus is placed directly between the fixed nucleus and the movable nucleus.

A third embodiment according to the present invention is illustrated in fig. 3 and provides that the closing element 34 of the conduit 24 is placed outside the solenoid valve so as to permit an easier and simpler maintenance and cleaning of the element 34 which is seated in the cup nut 35; in this case, as well as in the preceding cases, nothing excludes that the conduit 24 could be formed integral with the movable nucleus or it could be formed by a tube inserted into the nucleus and made integral with the same movable nucleus.

The fig. 4 shows a fourth embodiment according to the present invention which provides inside the movable nucleus the presence of a nonreturn valve formed by a ball 37, with a light material so as to be able to float on the liquid, kept downwards by a cross element 38 formed for the air passage and engaging upwards a gasket 39, shown in the drawing as an O-ring, in turn held in place by a bush 40 pushed into the seat by a spring 41 of the solenoid valve. During the delivery step the incidental liquid rising through the conduit 24 will push the ball 37 so as to seal against the gasket 39. It is to be noted that in all embodiments of the present invention from Fig. 1 to Fig. 4 there is the areation conduit (26) formed on the sleeve 14.

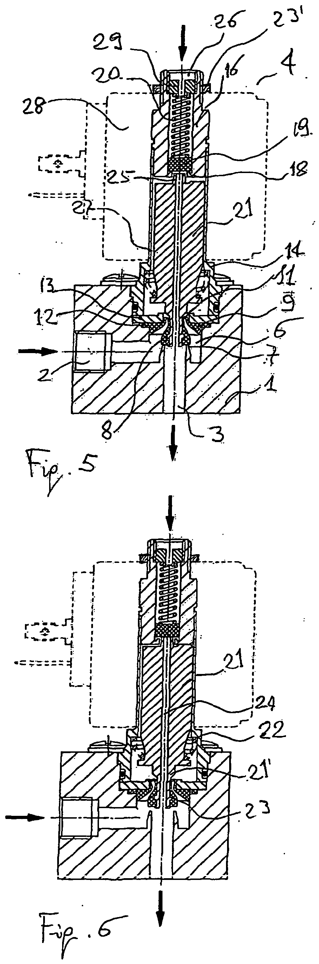

Referring now to figs. 5 and 6, and to the prior art description with 1 there is pointed out the faucet body wherein there are housed the inlet conduit 2 and the outlet conduit 3 and the seat of the control system generally indicated with 4, in which the orifice 7 is formed.

The membrane 9 separates the chamber 6 from the mechanical parts of the faucet and comprises the closing element 10, the volute 11 permitting the movement of the same membrane and the sealing 12. Said membrane is held in place by the washer 13 in turn blocked by the sleeve 14, welded to the fixed nucleus 16 which in turn contains the shutter 19 which seals the orifice 25 pushed by a spring 20 held in place by the nut 29; into the fixed nucleus a washing gas entry line 26 is formed. On the sleeve the coil 28 is mounted held in place by the nut 23'. Inside the sleeve the movable nucleus 21 moves sealed and integral with the membrane by the projection 23 formed in the protrusion 21' of the same nucleus; inside said nucleus the conduit 24 passes ending in the upper portion with the orifice 25 having a diameter smaller than the one of the orifice 18, the nucleus is pushed downwards by the spring 22 to force the closing element 10 so as to seal on the orifice 7. Therefore with the valve not excited the sleeve interior is communicating with the exit, the washing gas entry 26 is closed by the shutter 19 engaging the orifice 25. When the faucet is excited and the movable nucleus contacts the fixed nucleus, it drags the closing element 10 while opening the passageway between the inlet 2 and the outlet 3 thus permitting the beverage delivery. The orifice 25 engages the shutter 19 while closing the conduit 24 for the gas passing and, simultaneously, lifts the same shutter disengaging it from the orifice 25, thus opening the gas passing from the entry 26 towards the sleeve which fills up with pressurized gas.

Once the faucet is no more excited, the previously described condition is restored:
the amount of pressurized gas contained within the sleeve interior exits at this point through the conduit 24 towards the outlet port pushing outwards the product being therein and washing and drying said conduit in a really full manner. Normally this gas is the same and at the same pressure of the one pushing the product from the tank towards the distributor, thus also achieving the advantage of a balance onto the membrane during delivering with a consequent operation safer than the closing of the same faucet.

## Claims

1. A beverage delivering device comprising:
(i) a faucet body (1) provided with an inlet conduit (2) for said beverages and with an outlet conduit (3) for delivering said beverages and a valve seat disposed therebetween,
(ii) a solenoid valve operatively associated to said faucet body (1) and
(iii) an aeration conduit system (24,25,26,27),
- said solenoid valve comprising a movable flow cut-off member (21) arranged inside a sleeve (14) of the solenoid valve and cooperating with the valve seat in order to open or close the connection between the inlet conduit (2) and the outlet conduit (3),
- said aeration conduit system comprising;
- an aeration conduit (26),
- an aeration passage (24)leading through said movable flow cut-off member (21) and communicating with the outlet conduit (3), and
- a control device (19,25;31;32;34;38;39) provided such that in the closed position of the movable flow cut-off member(21) passage of air from said aeration conduit (26) to the outlet conduit (3) is allowed whilst in the open position of the movable flow cut-off member (21) passage of air from said aeration conduit (26) to the outlet conduit (3) is prevented,
***characterized in that*** said aeration conduit (26) is formed in the sleeve (14) of the solenoid valve.

2. The device according to claim 1, wherein said solenoid valve is supplied by alternate current.

3. The device according to claim 1, wherein said solenoid valve is supplied by direct current.

4. The device according to claim 1, wherein said control device comprises a non-return valve (37).

## Patentansprüche

1. Vorrichtung zur Abgabe von Getränken enthaltend:
(i) einen Hahnkörper (1), der eine Einlassleitung (2) für die Getränke und eine Auslassleitung (3) zur Abgabe der Getränke aufweist, sowie einen zwischen den Leitungen angeordneten Ventilsitz,
(ii) ein dem Hahnkörper (1) zweckmäßig zugeordnetes Elektroventil, und
(iii) eine Luftganganordnung (24, 25, 26, 27),
- wobei dieses Elektroventil ein innerhalb einer Ventilsbüchse (14) angeordnetes, zum Stromabfangen geeignetes Bewegungssperrelement (21) aufweist, welches mit dem Ventilsitz zusammenwirkt, um die Verbindung zwischen der Einlassleitung (2) und der Auslassleitung (3) zu öffnen bzw. schließen,
- wobei diese Luftganganordnung umfasst:
- einen Luftgang (26),
- einen durch das Bewegungssperrelement (21) durchgehenden und mit der Auslassleitung (3) verbindenden Durchgang (24), und
- ein Steuergerät (19; 25; 31; 32; 34; 38; 39) derart ausgestaltet, dass der Durchlass aus den Luftgang (26) an die Auslassleitung (3) bei der Schließstellung des Bewegungssperrelements (21) gestattet wird, während der Durchlass aus dem Luftgang (26) an die Auslassleitung (3) bei der Öffnungsstellung des Bewegungssperrelements (21) verhindert wird,
- **dadurch gekennzeichnet, dass** der Luftgang (26) innerhalb der Büchse (14) des Elektroventils herausgearbeitet wird.

2. Vorrichtung nach Anspruch 1, worin das Elektroventil eine Gleichstromversorgung aufweist.

3. Vorrichtung nach Anspruch 1, worin das Elektroventil eine Wechselstromversorgung aufweist.

4. Vorrichtung nach Anspruch 1, worin das Steuergerät ein Rückschlagventil (37) aufweist.

## Revendications

1. Dispositif pour distribuer des boissons, comprenant:
(i) un corps de robinet (1) muni d'un conduit d'entrée (2) pour les boissons et d'un conduit de sortie (3) pour la distribution des boissons, et un siège de vanne disposé entre eux,
(ii) une électrovanne associée en service au corps de robinet (1), et
(iii) un système de conduits d'aération (24, 25, 26, 27),
- la dite électrovanne comprenant un organe mobile (21) d'interception de l'écoulement disposé à l'intérieur d'un fourreau (14) de l'électrovanne et coopérant avec le siège de vanne pour ouvrir ou fermer la liaison entre le conduit d'entrée (2) et le conduit de sortie (3),
- le dit système de conduits d'aération comprenant :
- un conduit d'aération (26),
- un passage d'aération (24) en traversant l'organe mobile (21) d'interception et communiquant avec le conduit de sortie (3), et
- un dispositif de contrôle (19,25 ; 31 ; 32 ; 34 ; 38 ; 39) configuré de sorte que, dans la position fermée de l'organe mobile (21) d'interception de l'écoulement, le passage d'air du conduit d'aération (26) au conduit de sortie (3) est admis, tandis que dans la position ouverte de l'organe mobile (21) d'interception de l'écoulement, le passage d'air du conduit d'aération (26) au conduit de sortie (3) est empêché,
- **caractérisé en ce que** le conduit d'aération (26) est tiré dans le fourreau (14) de la électrovanne.

2. Dispositif selon la revendication 1, dont la dite électrovanne a une alimentation à courant continu.

3. Dispositif selon la revendication 1, dont la dite électrovanne a une alimentation à courant alternatif.

4. Dispositif selon la revendication 1, dont le dit dispositif de contrôle comprend un clapet de non-retour (37).
